# EUROPÄISCHE PATENTSCHRIFT

(11) **EP 3 510 001 B1**
(45) Veröffentlichungstag und Bekanntmachung des Hinweises auf die Patenterteilung: **15.07.2020**
(21) Anmeldenummer: 17757685.7
(22) Anmeldetag: 07.08.2017
(51) Int. Cl.: C03B 9/38

(54) **FORM- UND MÜNDUNGSKÜHLUNGSANORDNUNG FÜR EINE GLASFORMMASCHINE**
MOLD AND OPENING COOLING ASSEMBLY FOR A GLASS MOLDING MACHINE
DISPOSITIF DE REFROIDISSEMENT DE MOULES ET D'EMBOUCHURES POUR UNE MACHINE À MOULER LE VERRE

(30) Priorität: 09.09.2016 DE 102016010802
(43) Veröffentlichungstag der Anmeldung: 17.07.2019
(73) Patentinhaber: Heye International GmbH, 31683 Obernkirchen (DE)
(72) Erfinder: SAGEBIEL, Helmut, 31787 Hameln (DE); HARDEKOPF, Daniel, 31691 Helpsen (DE); FELGENHAUER, Benedikt, 32049 Herford (DE); SCHÖTTELNDREIER, Ralf, 31688 Nienstädt (DE)
(74) Vertreter: Sobisch, Peter
(86) Internationale Anmeldenummer: PCT/EP2017/000957
(87) Internationale Veröffentlichungsnummer: WO 2018/046114

(56) Entgegenhaltungen:
- EP-A2- 1 149 806
- WO-A1-94/12440

## Beschreibung

Die Erfindung bezieht sich auf eine Form- und Mündungskühlungsanordnung entsprechend den Merkmalen des Oberbegriffs des Anspruchs 1.

Die Darstellung angemessener gleichförmiger und insbesondere reproduzierbarer Temperaturverhältnisse während des Formgebungsprozesses in den Vor- und Fertigformen einer Glasformmaschine, beispielsweise einer I.S. Maschine ist von großer Bedeutung für die eigentliche Formung, jedoch auch für die mechanischen Eigenschaften des Külbels bzw. des abschließend geformten Hohlglasartikels. Es geht hierbei um die eigentliche Formkühlung, welche durch Kühlmittelbohrungen in den Formwandungen bewirkt wird und um die Mündungskühlung, welche den Mündungsbereich des zu formenden Artikels, nämlich eines Hohlglasartikels betrifft. Hinzutritt die konstruktive Ausbildung aller zur Führung eines Kühlmittels, z. B. Kühlluft bestimmten Elemente, welche ein einfaches und rationelles Eingreifen für Wartungs- und Instandsetzungsarbeiten ermöglichen und gleichermaßen in ihrer konkreten Ausbildung für den Einsatz in der häufig abrasiven betrieblichen Atmosphäre einer Glashütte geeignet sein sollten.

Nachdem die Formen üblicherweise aus Formhälften zusammengesetzt sind, die während des Formgebungsprozesses zwischen einer Öffnungs- und einer Schließstellung bewegbar angeordnet sind, muss bei dem Konzept der Kühlmittelführung ein beweglicher Abschnitt vorgesehen werden, der das Bindeglied zwischen einer fest, beispielsweise in einem Stationskasten angeordneten Kühlmittelversorgung und den demgegenüber entsprechend der Öffungs- und Schließbewegung beweglichen Teilen bildet. Von Bedeutung ist ferner die Frage, wie komplex sich in arbeitstechnischer Hinsicht eine Umrüstung auf eine andere Formenhöhe gestaltet.

Es hat sich gezeigt, dass den vorstehend aufgelisteten Anforderungen mit den bisher bekannten Ausführungsformen einer Kühlungsanordnung nur unvollkommen begegnet werden kann.

Die bekannten Ausführungsformen sind dadurch gekennzeichnet, dass eine Form-und eine Mündungskühlung aus einer gemeinsamen Öffnung des Stationskastens mit Kühlluft versorgt werden. Ein Einsatz von getrennt schaltbaren, insbesondere für die Formkühlung ausreichend dimensionierten Ventilen ist damit häufig nicht möglich.

Eine gattungsgemäße Form- und Mündungskühlungsanordnung ist aus EP 1 149 806 A2 bekannt, bei der eine Mündungskühlung und eine Formkühlung unabhängige voneinander eingerichtet sind. Hierbei ist jedoch ein teleskopierbares Kühlrohr als Teil der Formkühlung vorgesehen, so dass die zum Längenausgleich bestimmten Funktionselemente gegenüber betrieblichen Umgebungseinfflüßen ungeschützt angeordnet sind.

Es ist daher die Aufgabe der Erfindung, eine Form- und Mündungskühlungsanordnung der eingangs bezeichneten Art mit Hinblick auf die Kühlluftführung, die Verschleißanfälligkeit, die Komplexität von Umrüstarbeiten sowie die Wartungsfreundlichkeit hin zu verbessern. Gelöst ist diese Aufgabe bei einer solchen Form-und Mündungskühlungsanordnung durch die Merkmale des Kennzeichnungsteils des Anspruchs 1.

Erfindungswesentlich ist hiernach eine von der Mündungskühlung unabhängige Formkühlung, in die ein Kühlkanal eingebunden ist, der das Bindeglied zwischen ortsfest angeordneten Teilen wie einem Stationskasten und beweglichen Teilen wie einem Formenhalter bildet. Der Kühlkanal steht an seinem einen Ende gelenkig, z. B. um eine Achse schwenkbar mit dem Stationskasten und an seinem anderen Ende gelenkig, beispielsweise schwenkbar sowie einen Längenausgleich ermöglichend mit einer Baugruppe in Verbindung, die an dem Formenhalter angeordnet ist. Dies eröffnet die Möglichkeit, die zur Darstellung der Schwenkbarkeit sowie des Längenausgleichs des Kühlkanals benötigten baulichen Funktionselemente gegenüber Verschmutzung und sonstigen betrieblichen Umgebungseinflüssen geschützt anzuordnen, nämlich an bzw. in dem Stationsgehäuse sowie in die genannte Baugruppe einbezogen. Dies eröffnet ferner die Möglichkeit, einen Kühlkanal mit einem großen Querschnitt einzusetzen, der im Rahmen der Öffnungs- und Schließbewegungen der Formenhalter lediglich geringe Ausgleichsbewegungen ausführt, so dass ein dementsprechend nur geringer Verschleiß entsteht. Erreicht wird ein äußerst flexibler, an der Darstellung einer artikelspezifisch angemessenen Kühlleistung orientierter Betrieb des Glasformungsprozesses.

Die Mündungskühlung ist von der Formkühlung getrennt, nachdem diesen voneinander getrennte Öffnungen des Stationsgehäuses zugeordnet sind. Auf diese Weise wird ein Einsatz von getrennt schaltbaren Ventilen im Rahmen der Formkühlung sowie der Mündungskühlung und insbesondere für die Formkühlung, jedoch auch für die Mündungskühlung die Verwendung von ausreichend dimensionierten Ventilen möglich. Aus dem Stand der Technik bekannt ist demgegenüber die gemeinsame Versorgung von Mündungs- und Formkühlung aus einer Öffnung je Seite im Stationskasten.

Das Kühlstück bildet das Bindeglied zwischen der genannten Baugruppe und einer Formhälfte bildet. Das Kühlstück ist auf seinem der Formhälfte zugekehrten Ende mit vertikal orientierten Luftaustritten versehen, die in einem zum Untergreifen einer Stufe der Formhälfte bestimmten Abschnitt angeordnet sind und auf diese Weise in eine durchgängige Verbindung mit den Kühlluftbohrungen der Formhälfte bringbar sind. Das Kühlstück steht aus Gründen des einfachen Austauschs lösbar mit der Baugruppe in Verbindung.

Durch die gleitfähige Aufnahme des Kühlkanals innerhalb des Aufnahmeabschnitts ist eine Längsverschieblichkeit dargestellt, so dass außerhalb des Aufnahmeabschnitts keine Maßnahmen wie beispielsweise eine teleskopierbare Ausgestaltung des Kühlkanals anfallen, die den betrieblichen Umgebungseinflüssen des Glasformprozesses ausgesetzt sind. Wesentlich ist, dass bei dieser Art der Ausgestaltung Verschleißgesichtspunkte beachtet worden sind, so dass Gleitflächen sowie sonstige Lagerstellen geschützt angeordnet sind. Soweit Schmierstellen vorgesehen sind, sollten diese entsprechend der geplanten Lebensdauer eingerichtet sein.

Der entsprechend den Merkmalen des Anspruchs 2 vorgesehene Anschlussabschnitt steht mit der genannten Baugruppe in Verbindung und ist intern mit zur Darstellung einer schwenkbaren sowie längsverschiebbaren Aufnahme des Kühlkanals ausgerüstet. Der Anschlussabschnitt dient somit der Darstellung einer geschützten Aufnahme des diesem zugekehrten Endes des Kühlkanals.

Gemäß den Merkmalen der Ansprüche 3 und 4 steht die den Anschlussabschnitt tragende Baugruppe lösbar mit einem Formenhalter in Verbindung und beinhaltet ein Drosselgehäuse. Sie ist somit im Bedarfsfall einfach austauschbar. In dem Drosselgehäuse ist ein Sperrkörper beweglich aufgenommen, durch dessen Gestalt und Position innerhalb des Strömungspfades der Kühlluft im Rahmen der Formkühlung der Kühlluftstrom verändert werden kann. Die Kühlluftströme einer rechten und einer linken Hälfte einer Formhälfte können unabhängig voneinander eingestellt werden.

Der Kühlkanal weist entsprechend den Merkmalen des Anspruchs 5 einen rechteckigen Querschnitt auf.

Gemäß den Merkmalen der Ansprüche 6 und 7 befindet sich die zur Auflagerung der Formhälfte bestimmte Stufe in deren unterem Bereich. Die Kühlluft durchströmt die Wandungen innerhalb der Kühlluftbohrungen somit von unten nach oben. Auf diese Weise wird verhindert, dass sich in einer Vorform eine übermäßige Abkühlung des Halsbereichs des geformten Hohlglasartikels ergibt, wobei gleichzeitig eine ausreichende Kühlung des Bodenbereichs darstellbar ist. Zusätzlich wird auf diesem Wege vermieden, dass sich die Oberfläche des Stationskastens aufheizt und es zu Verwirbelungen bzw. Beeinträchtigungen der Mündungskühlluft kommt. Eine umgekehrte Strömungsrichtung der Kühlluft und eine dementsprechende Anordnung des Kühlstücks relativ zu der Formhälfte wird jedoch nicht ausgeschlossen.

Die Merkmale der Ansprüche 8 und 9 sind auf eine weitere konstruktive Konkretisierung der Anordnung des Kühlstücks gerichtet. Die genannte Baugruppe ist mit einer Stufe versehen, auf der das Kühlstück aufgelagert ist. Dadurch, dass sich das Kühlstück auf einer im Verhältnis zu dem Formhalter festen Höhenlage befindet, entfällt bei einem Übergang auf eine andere Formenhöhe eine Höhenanpassung, so dass sich insoweit Umrüstarbeiten vereinfachen. Die Formenkühlung ist als 360° Kühlung eingerichtet.

Die Merkmale der Ansprüche 10 bis 14 sind auf eine Ausgestaltung der Mündungskühlung gerichtet. Diese umfasst einen teilweise innerhalb des Stationsgehäuses angeordneten, höhenverstellbaren Kühlungsaufbau, der an seinem, aus dem Stationskasten herausragenden Ende mit einem Austrittsschlitze aufweisenden Abschnitt versehen ist. Dieser Abschnitt steht zwecks Anpassung an unterschiedliche Formhälften vorzugsweise lösbar mit dem Kühlungsaufbau in Verbindung und es weisen die Austrittsschlitze eine horizontale, auf den Mündungsbereich des geformten Hohlglasartikels hin gerichtete Ausströmungsrichtung auf. Der Kühlungsaufbau ist innerhalb eines Führungsgehäuses verschiebbar, insbesondere höhenverstellbar angeordnet, welches seinerseits fest mit dem Stationskasten in Verbindung steht. Der Höhenver-stellbarkeit ist ein Antrieb zugeordnet, der über eine Antriebswelle mit einem Spindel-hubgetriebe in Verbindung steht. Unter dem Führungsgehäuse, somit innerhalb des Stationskastens hängt das Spindelhubgetriebe, welches somit optimal gegenüber Umgebungseinflüßen aus dem Glasfertigungsprozess geschützt angeordnet ist.

Der zur Höheneinstellung der Mündungskühlung, insbesondere des Kühlungsaufbaus bestimmte Antrieb ist entsprechend den Merkmalen des Anspruchs 15 außenseitig an dem Stationskasten angebracht und somit für Reparatur- und Inspektionszwecke gut zugänglich. Im Rahmen des Antriebs kann beispielsweise ein Servomotor oder ein Schrittmotor eingesetzt werden, so dass eine sehr genaue Höheneinstellung möglich ist. Der Antrieb kann bei einem Austausch der Mündungskühlung einschließlich seiner Antriebswelle aus dem Spindelhubgetriebe herausgezogen werden.

In Verbindung mit einer Artikeldatenbank, in der unterschiedliche Höhenmaße der eingesetzten Formen gespeichert sind, ist entsprechend den Merkmalen des Anspruchs 16 eine automatische Höheneinstellung der Mündungskühlung darstellbar.

Die für die Mündungskühlung eingerichteten Strömungspfade sind entsprechend den Merkmalen des Anspruchs 17 mit Einrichtungen zur Drosselung des Kühlluftstromes ausgerüstet, so dass insoweit eine Anpassung der Kühlleistung an den erforderlichen Bedarf gegeben ist. Der vorzugsweise aus Guss bestehende Kühlungsaufbau ist strömungsoptimiert gestaltet und kann mit Einrichtungen zur Drosselung jeweils für eine Hälfte eines Mündungsformwerkzeugs versehen sein.

Die erfindungsgemäße Kühlluftführung ist hauptsächlich für die Kühlung der Vorform in Verbindung mit einem Parallelschließmechanismus bestimmt.

Die Erfindung wird im Folgenden unter Bezugnahme auf das in den Zeichnungen dargestellte Ausführungsbeispiel näher erläutert werden. Es zeigen:
- Fig. 1: eine perspektivische seitliche Ansicht eines Formenschließmechanismus mit Form- und Mündungskühlung einer Glasformmaschine;
- Fig. 2: eine perspektivische vorderseitige Ansicht des Formenschließmechaanismus mit Form- und Mündungskühlung gemäß Fig. 1;
- Fig. 3: eine isolierte perspektivische seitliche Ansicht der Kühlluftführung für die Formen;

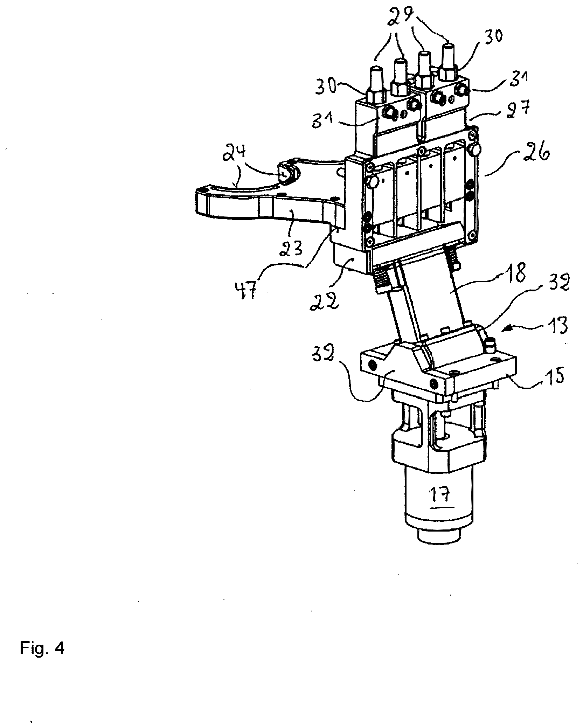

- Fig. 4: eine isolierte perspektivische rückseitige Ansicht der Kühlluftführung für die Formen;

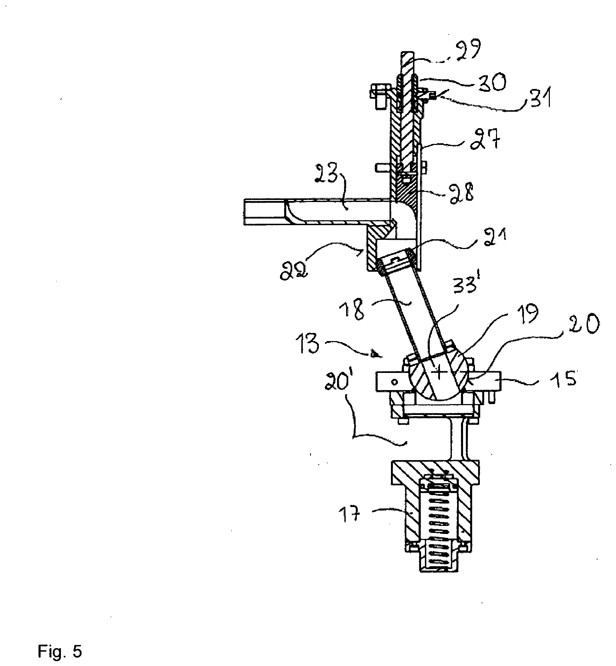

- Fig. 5: eine Teilansicht der Kühlluftführung gemäß Fig. 3 in einer Schnittdarstellung;

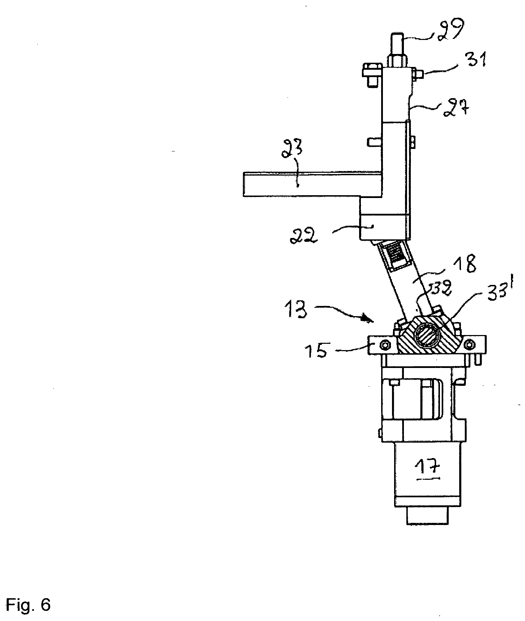

- Fig. 6: eine Teilansicht gemäß der Kühlluftführung gemäß Fig. 5 in teilweiser Schnittdarstellung;

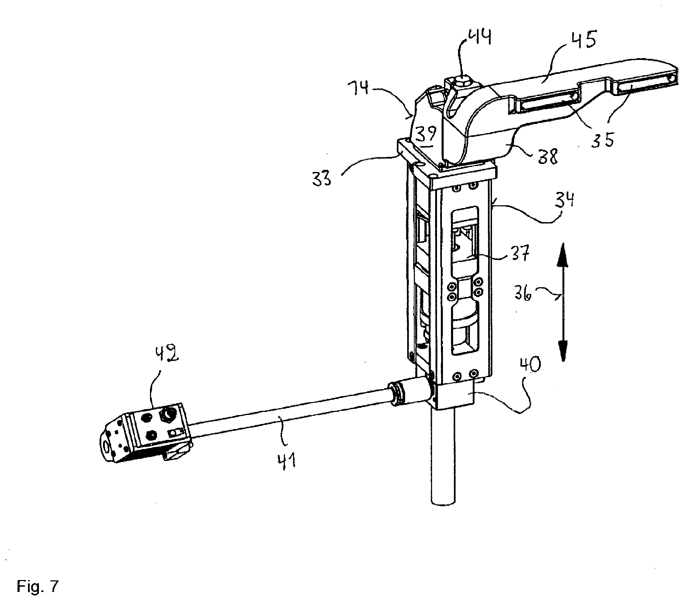

- Fig. 7: eine isolierte perspektivische seitliche Ansicht der Kühlluftführung für die Mündungskühlung;

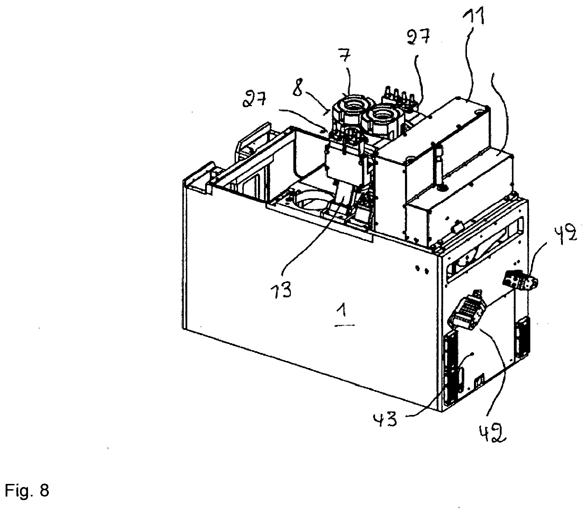

- Fig. 8: eine perspektivische Ansicht des den Formhaltermechanismus gemäß Fig. 1 tragenden Stationskastens;

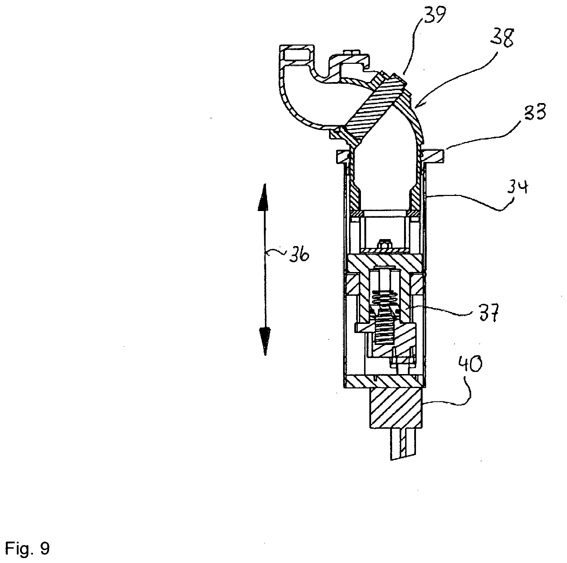

- Fig. 9: eine teilweise Schnittansicht der Kühlluftführung gemäß Fig. 7;
- Fig. 10: eine perspektivische Gesamtansicht der Kühlluftführungen für die Form-sowie die Mündungskühlung.

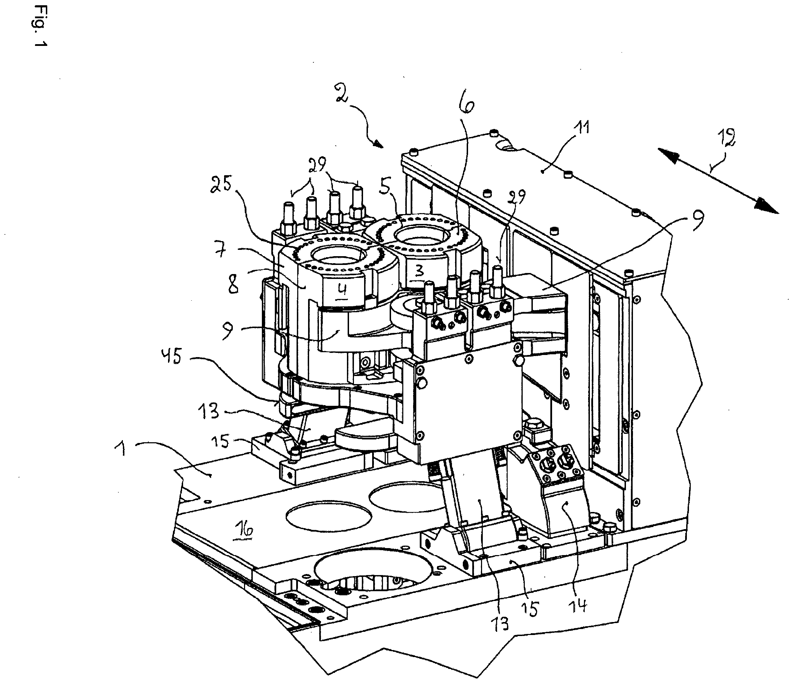

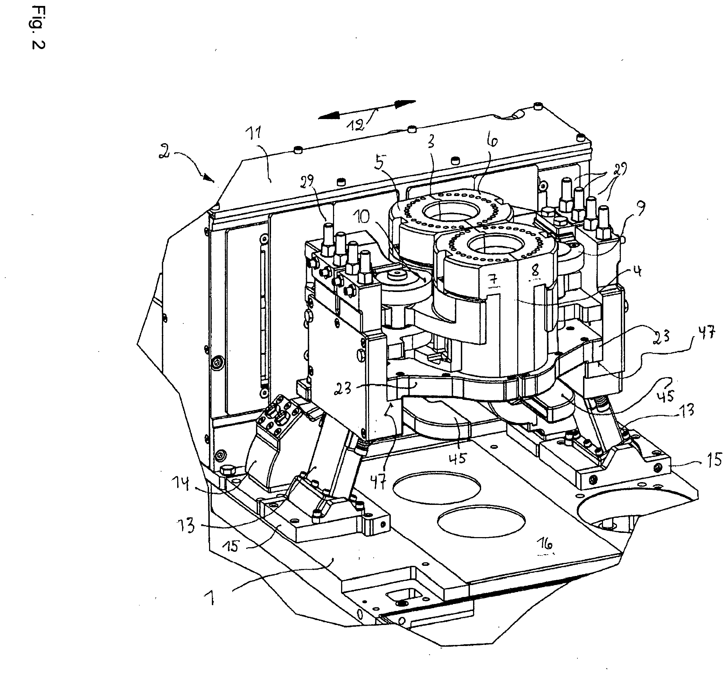

Mit 1 ist in den Figuren 1 und 2 der Stationskasten einer I.S. Maschine bezeichnet, auf dem bzw. an dem ein Formenhaltemechanismus 2 angeordnet ist. Zur Darstellung einer Kühlluftversorgung kann der Stationskasten 1 unter Überdruck stehen, von dem die Kühlluftversorgung sowohl für die Formen als auch deren Mündungsbereich abgeleitet wird, wobei im Folgenden die Kühlluftführung innerhalb des Formenhaltemechanismus 2 näher erläutert wird.
Der Formenhaltemechanismus 2 ist beispielhaft zur Halterung von zwei zur Formgebung von Hohlglasartikeln bestimmten Formen 3, 4 eingerichtet, die jeweils aus zwei Formhälften 5, 6 bzw. 7, 8 bestehen. Die Formhälften 5, 6, 7, 8 werden von Formhaltern 9, 10 getragen, die innerhalb eines Gehäuseabschnitts 11 unter Mitwirkung eines zeichnerisch nicht dargestellten Antriebs in einer Horizontalebene in Richtung der Pfeile 12 zwischen einer in den Zeichnungen dargestellten Schließstellung der Formhälften und deren Öffnungsstellung parallel verschiebbar angeordnet sind.
Mit 14 ist die Mündungskühlung, nämlich die Anbindung der für den Mündungsbereich bestimmten Kühlluftzufuhr an das Stationsgehäuse 1 und mit 13 die Formkühlung, nämlich die Anbindung der für die Formen bestimmten Kühlluftzufuhr an das Stationsgehäuse 1 bezeichnet, wobei diese Anbindungen derart beschaffen sind, dass durch die Öffnungs- und Schließbewegung der Formhälften 5, 6, 7, 8 bedingte Abstands- und Richtungsänderungen relativ zu den Formhälften überbrückbar sind. Hierauf wird im Folgenden noch näher eingegangen werden.

Wie im Folgenden ebenfalls noch erläutert werden wird, sind die Formkühlung 13 sowie die Mündungskühlung 14 als 360° Kühlungen angelegt, d. h. als Kühlung, die gleichförmig während eines gesamten Zyklus einer Öffnungs- und Schließbewegung der Formhälften 5 bis 8 wirksam ist.

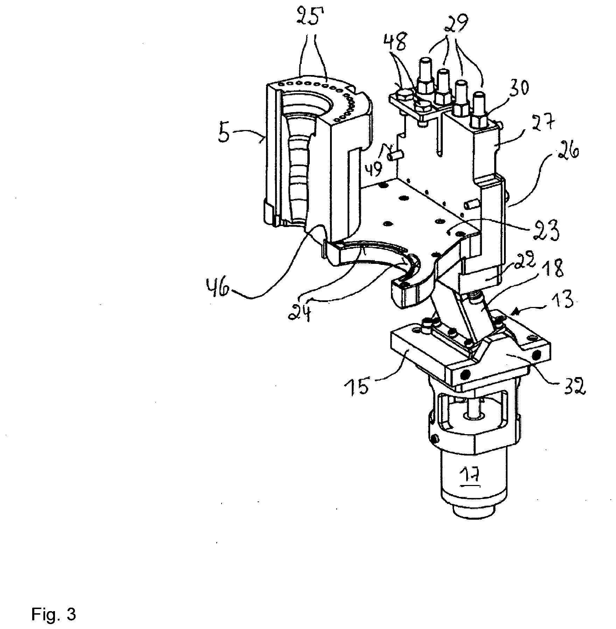

In den Figuren 3 bis sind Funktionselemente, die mit denjenigen der Figuren 1 und 2 übereinstimmen, entsprechend beziffert, so dass auf eine diesbezügliche wiederholte Beschreibung verzichtet werden kann.

Die Formkühlung 13 ist durch eine plattenartige Aufnahme 15 gekennzeichnet, die auf der Oberseite 16 des Stationsgehäuses 1 angeordnet ist und welche im Rahmen der Kühlluftführung das Bindeglied zwischen einem innerhalb des Stationsgehäuses 1 angeordneten Ventil 17 und einem schwenkbar angeordneten, im Querschnitt rechteckigen Kühlkanal 18 bildet. Der Kühlkanal 18 endet auf seiner, der Aufnahme 15 zugekehrten Seite in einem balligen Führungskörper 19, welcher in einem dem profilmäßig entsprechenden Führungsabschnitt 20 der Aufnahme 15 aufgenommen ist, hierbei einen Strömungspfad für die Kühlluft darstellend, der von einem Lufteinlaß 20' durch den Führungsabschnitt 19 in den Kühlkanal 18 führt, wobei Schließorgane des Ventils innerhalb dieses Strömungspfades angeordnet sind.
Mit 32 sind Lagerwangen bezeichnet, die seitlich an der Aufnahme 15 angeformt sind, in denen mittels Wälzlagern der Führungskörper 19 beidseitig um die Achse 33' drehbar gelagert ist. Diese Wälzlager sind innerhalb der Lagerwangen 32 vollständig eingehaust und auf Lebensdauer geschmiert.

Das der Aufnahme 15 abgekehrte Ende des Kühlkanals 18 endet in einem aus Bronze bestehenden, balligen Lagerkörper 21, der an der Innenseite des Einlaufabschnitts 22 dichtend anliegt, hierbei einen Strömungspfad in ein Kühlstück 23 hinein darstellend, der in einer Anordnung kreisringabschnittartiger Austrittsschlitze 24 endet. Der Kühlkanal 18 und der Einlaufabschnitt 22 sind im Querschnitt rechteckig ausgebildet, so dass während einer Öffnungs- oder Schließbewegung der Formhälften der Lagerkörper 21 auf der Innenseite des Einlaufabschnitts 22 eine Schwenk- und Gleitbewegung zum Ausgleich von Längen- und Winkeländerungen ausführt. Dadurch, dass der Lagerkörper 21 innerhalb eines Drosselgehäuses 27 angeordnet ist, ist ein optimaler Schutz der Gleitführung gegenüber dem in der betrieblichen Umgebung anfallenden abrasiv wirkenden Schmutz gegeben.

Man erkennt, dass die technische Umsetzung dieser Bewegungsverhältnisse durch lediglich geringe Relativbewegungen der aufeinander gleitenden Elemente gekenn-zeichnet sind, so dass ein dementsprechend geringer Verschleiß zu erwarten ist.

Man erkennt ferner, dass aufgrund der beidseitig gelenkigen Anbindung des Kühlkanals 18 die Öffnungs- und Schließbewegungen der Formhälften behinderungsfrei ausführbar sind.

Bei einem Ausbau des Schließmechanismus können das Ventil 17 nebst Gehäuse einschließlich des darauf gelagerten Kühlkanals 18 in bzw. auf dem Stationskasten 1 verbleiben, während das Kühlstücks 23 am Formenhalter des Schließmechanismus verbleibt.

Die genannte Anordnung der Austrittsschlitze 24 erstreckt sich entlang eines Halbkreises, der geometrisch an eine Anordnung von Kühlluftbohrungen 25 angepasst ist, welche die Wandungen einer jeden Formhälfte 5 achsparallel durchziehen. Der Anschlussabschnitt 22 und das Kühlstück 23 bilden einen Teil einer Baugruppe 26, welche jeweils eine Formhälfte 6 trägt und somit nach Maßgabe der Öffungs- und Schließbewegungen der Formhälften 5 gegenüber dem Stationskasten 1 beweglich angeordnet ist.

Jede Formhälfte 6 ist in ihrem unteren Bereich mit einer Stufe 46 versehen, welche eine horizontale Kreisringsegmentfläche bildet, welche von dem Kühlstück 23, und zwar in dem Bereich der Austrittssschlitze 24 untergriffen ist, aus denen die Kühlluft vertikal austritt und direkt in die Kühlluftbohrungen 25 der Formhälfte 6 eintritt. Derartige Kühlluftbohrungen 25 sind entlang des gesamten Umfangs der Form vorhanden. Das Kühlstück 23 ist auf der Stufe 46 durch Schrauben gesichert, so dass im Bedarfsfall eine einfache Austauschbarkeit gegeben ist. Das Kühlstück 23 befindet sich vorzugsweise auf einer im Verhältnis zu dem Formenhalter 9 konstanten Höhe, so dass beim Übergang auf eine andere Formenhöhe keinerlei Anpassungsarbeiten erforderlich sind.

Das Kühlstück 23 befindet sich vorzugsweise in der unteren Häfte der Formenhöhe, so dass nach Maßgabe des jeweiligen Blasverfahrens eine zu starke Abkühlung des Külbels im Halsbereich, welche dessen Längung zumindest behindert, vermieden wird. Durch die in den Kühlluftbohrungen 25 aufwärts strömende Kühlluft wird neben einer hinreichenden Kühlung des Bodenbereichs des Külbels in der Vorform verhindert, dass sich die Oberfläche des Stationskastens 1 übermäßig aufheizt, welches mit dem Risiko von Verwirbelungen und Beeinträchtigungen der Mündungskühlung einhergeht.

Mit 47 ist eine Stufe der Baugruppe 26 bezeichnet, die sich auf deren, den Formen zugekehrten Seite befindet und auf der das Kühlstück 23 aufgelagert sowie mit Schrauben gesichert ist.

Mit 27 ist ein Drosselgehäuse bezeichnet, welches ebenfalls mit der Baugruppe 26 in Verbindung steht und der Aufnahme eines Mechanismus dient, der dazu bestimmt ist, den Strömungsquerschnitt der Kühlluft innerhalb des Strömungspfades zwischen dem Anschlußabschnitt 22 und dem Kühlstück 23 zu verändern, hier zwischen einer maximalen und einer minimalen Öffnung zu steuern. Zu diesem Zweck ist ein Sperrkörper 28 vorgesehen, der mittels eines Spindelgetriebes mehr oder weniger in den genannten Strömungsquerschnitt verschiebbar ist. Ein jedes der Spindelgetriebe besteht aus einer Gewindespindel 29, welche mit einer axial unverschiebbar angeordneten Spindelmutter 30 in Wirkverbindung steht, deren Position in definierten, jeweils einem bestimmten Strömungsquerschnitt entsprechenden Rastpositionen mittels eines Kugeldruckstücks 31 fixierbar ist.

Die Baugruppe 26 und mit dieser das Drosselgehäuse 27 sind mittels Schrauben 48, 49 an dem jeweiligen Formenhalter 9 befestigt. In jedem Drosselgehäuse 27 befinden sich somit jeweils die für die Drosselung des Kühlluftstromes zu einer Formhälfte 5 bis 8 erforderlichen Mittel. Andere Teilungen des Kühlluftstromes sind ebenfalls möglich, so z. B. eine Ausführung, bei der jedes Drosselgehäuse jeweils der Hälfte einer Formhälfte 5 bis 8 zugeordnet ist.

In dem gezeigten Ausführungsbeispiel sind jeweils einer Formhälfte 6 zwei Gewindespindeln 29 und damit zwei Sperrkörper 28 zugeordnet. Diese Gruppierung und gleichermaßen die konstruktive Ausbildung des Antriebs der Sperrkörper 28 können im Rahmen des fachmännischen Kenntnisstandes beliebig variiert werden, worauf jedoch nicht näher eingegangen werden wird. Wesentlich ist, dass ausgehend von einem Lufteinlaß 20 über das Ventil 17, den Leitungsabschnitt 18, den Anschlussabschnitt 22, den Luftverteilungsabschnitt 23, die Austrittsschlitze 24 und die Kühlluftbohrungen 25 ein durchgängiger Strömungsspfad zur Kühlung der Formen 3, 4 dargestellt ist, wobei über das jeweilige Ventil 17 eine völlige Schließung des Strömungspfades darstellbar ist und wobei durch Ansteuerung der Sperrkörper 28 eine Drosselung des Kühlluftstromes erreichbar ist.

Der für die Anbindung der Mündungskühlung bestimmte Kühlungsaufbau 50 ist durch eine Grundplatte 33 gekennzeichnet, an der ein innerhalb des Stationskastens 1 hängendes Führungsgehäuse 34 angeordnet ist. Innerhalb des Führungsgehäuses 34, in den Richtungen der Pfeile 36 vertikal verschiebbar ist eine Baueinheit, welche ein Ventil 37 sowie den Kühlungsaufbau 50 umfasst. Das Ventil 37 und der Kühlungsaufbau 50 sind aufeinander montiert, so dass über den Kühlungsaufbau 50 strömungsoptimierte Leitungen zur Führung von Kühlluft zur Verfügung gestellt werden, die auf der, der Grundplatte 33 abgekehrten Seite in Austrittsschlitzen 35 enden. Letztere weisen eine horizontale Austrittsrichtung auf und sind auf den Mündungsbereich der jeweiligen Form gerichtet.

Über das Ventil 37 kann ein Kühlluftstrom zu dem Mündungsbereich der Form zur Gänze gesperrt bzw. geöffnet werden.

Innerhalb der Leitungen des aus Guss bestehenden Kühlungsaufbaus 14, 38 befindet sich jeweils eine Drosseleinrichtung 39, über deren Einstellung sich der auf den Mündungsbereich gelangende Kühlluftstrom vermindern oder erhöhen läßt. In dem gezeigten Ausführungsbeispiel ist beispielhaft ein zwei Austrittsschlitze 35 aufweisender Kühlungsaufbau 38 einer Formhälfte 5 zugeordnet. Der die Austrittsschlitze 35 führende Abschnitt 45 des Kühlungsaufbau 38 ist durch eine Schraube 44 an dem Kühlungsaufbau 50 gehalten, so dass eine montagemäßig einfach handhabbare Möglichkeit eingeräumt ist, diesen Abschnitt 45 bei einem Wechsel der Form aus Gründen der Geometrie oder im Fall einer Beschädigung auszutauschen.

Mit 40 ist ein Spindelhubgetriebe bezeichnet, welches über eine Antriebswelle 41 mit einem Antrieb 42, einem Schritt- oder Servomotor in Verbindung steht, der aus einer rückseitigen Wandung 43 des Stationskastens 1 herausragt. Das Spindelhubgetriebe 40 steht mit dem Führungsgehäuse 34 in Verbindung und dient über eine zeichnerisch nicht dargestellte Spindelwelle der Verstellung der Höhenposition der Austrittsschlitze 35, so dass die erfindungsgemäße Mündungsbereichskühlung in einfacher Weise an unterschiedliche Formenhöhen anpassbar ist. Eine Höhenverstellung ist somit durch eine motorisch durchführbare Verschiebung des Kühlungsaufbaus 38 in Richtung der Pfeile 36 möglich.

Ein Umbau auf eine andere Formenhöhe kann somit unter Benutzung einer Artikeldatenbank abgewickelt werden, in der die Höhenmaße unterschiedlicher Artikel gespeichert sind. Auf diese Weise ist eine einfache und insbesondere schnelle Umrüstung der Mündungskühlung auf andere Formenhöhen durchführbar.

Erfindungsgemäß weist das Kühlstück 23 eine konstante Höhe im Vergleich zu dem Formenhalter 9, 10 auf, so dass insoweit bei einem Übergang auf eine andere Formenhöhe keine Anpassungsarbeiten erforderlich sind.
Der Antrieb 42 ragt aus einer Öffnung in der Stirnseite 43 des Stationskastens 1 heraus und ist auf diese Weise gut zugänglich angeordnet. Er kann im Bedarfsfall zusammen mit der Antriebswelle 41 aus dem Spindelhubgetriebe 40 herausgezogen und in umgekehrter Richtung eingesetzt werden. Für ein vereinfachtes erneutes Einsetzen in das Spindelhubgetriebe 40 kann im Stationskasten 1 eine zeichnerisch nicht dargestellte Zentrierhilfe zur Verfügung gestellt werden.

Das Spindelhubgetriebe 40 hängt unterseitig an dem Führungsgehäuse 34 und befindet sich somit innerhalb des Stationskastens 1. Es ist somit gegenüber Beeinflussungen aus dem Glasformgebungsprozess geschützt angeordnet.

Zur Darstellung einer Kühlluftversorgung kann der Stationskasten 1 unter Überdruck stehen. Man erkennt, dass das Ventil 37 und insbesondere das Spindelhubgetriebe 40 innerhalb des Stationskastens 1 vor abrasiven Umgebungseinflüssen, hier des Glasfertigungsprozesses geschützt angeordnet sind.

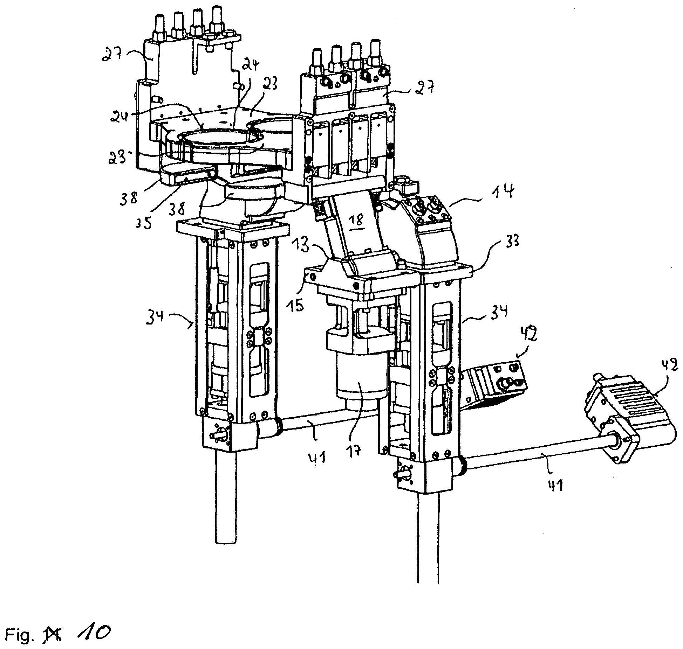

Fig. 10 zeigt das erfindungsgemäße Nebeneinander der vorstehend beschriebenen Komponenten der Form- und der Mündungskühlung 13, 14.

Man erkennt, dass mit dem erfindungsgemäßen Formenhaltemechanismus ein flexibles, servicefreundlich ausgebildetes System zur Kühlluftführung zur Verfügung gestellt wird, welches durch voneinander unabhängige Steuerungen einer Mündungskühlung und einer Formkühlung gekennzeichnet ist.

### Bezugszeichenliste:

- 1.: Stationskasten
- 2.: Formenhaltemechanismus
- 3.: Form
- 4.: Form
- 5.: Formhälfte
- 6.: Formhälfte
- 7.: Formhälfte
- 8.: Formhälfte
- 9.: Formhalter
- 10.: Formhalter
- 11.: Gehäuseabschnitt
- 12.: Pfeile
- 13.: Formkühlung
- 14.: Mündungskühlung
- 15.: Aufnahme
- 16.: Oberseite
- 17.: Ventil
- 18.: Kühlkanal
- 19.: Führungskörper
- 20.: Führungsabschnitt
- 20.: Lufteinlaß
- 21.: Bronzestück
- 22.: Anschlußabschnitt
- 23.: Kühlstück
- 24.: Luftaustritt
- 25.: Kühlluftbohrung
- 26.: Baugruppe
- 27.: Drosselgehäuse
- 28.: Sperrkörper
- 29.: Gewindespindel
- 30.: Spindelmutter
- 31.: Kugeldruckstück
- 32.: Lagerwange
- 33.: Grundplatte
- 33.: Achse
- 34.: Führungsgehäuse
- 35.: Austrittsschlitz
- 36.: Pfeile
- 37.: Ventil
- 38.: Kühlungsaufbau
- 39.: Drosseleinrichtung
- 40.: Spindelhubgetriebe
- 41.: Antriebswelle
- 42.: Antrieb
- 43.: Stirnseite
- 44.: Schraube
- 45.: Abschnitt
- 46.: Stufe
- 47.: Stufe
- 48.: Schraube
- 49.: Schraube
- 50.: Kühlungsaufbau

## Patentansprüche

1. Form- und Mündungskühlungsanordnung für eine Glasformmaschine mit einem Stationskasten (1), mit wenigstens einer, aus zwei Formhälften (5, 6, 7, 8) zusammengesetzten Form (3, 4), wobei die Formhälften jeweils an einem Formhalter (9, 10) angeordnet und mittels eines Antriebs zwischen einer Öffnungs- und einer Schließstellung bewegbar sind, wobei jeder Form (3, 4) eine Mündungskühlung (13) und eine Formkühlung (14) zugeordnet ist, wobei innerhalb des Stationskastens (1) eine Kühlluftversorgung eingerichtet ist, wobei die Mündungskühlung (13) sowie die Formkühlung (14) unabhängig voneinander sowie an voneinander getrennten Öffnungen des Stationskastens (1) angeschlossen sind, wobei die Formkühlung (14) einen Kühlkanal (18) auf-weist, dessen eines Ende gelenkig mit dem Stationskasten (1) in Verbindung steht, **dadurch gekennzeichnet, dass** das andere Ende der Formkühlung (14) gelenkig sowie einen Längenausgleich ermöglichend mit einer Baugruppe (26) in Verbindung steht, die ihrerseits durch einen Formenhalter (8, 9) gehalten ist, mit einem, ein Bindeglied zu wenigstens einer Formhälfte (5, 6, 7, 8) bildenden, lösbar mit der Baugruppe (26) in Verbindung stehenden Kühlstück (23), dass der Kühlkanal (18) an seinem, dem Stationskasten (1) zugekehrten Ende um eine horizontale Achse (33') schwenkbar und an seinem, dem Stationskasten (1) abgekehrten Ende in einem Anschlussabschnitt (22) der Baugruppe (26) gleitfähig aufgenommen ist.

2. Form- und Mündungskühlungsanordnung nach Anspruch 1, dadurch gekenn-zeichnet, dass das genannte andere Ende des Kühlkanals (18) in einen Anschlussabschnitt (22) der Baugruppe (26) eingesteckt ist.

3. Form- und Mündungskühlungsanordnung nach einem der Ansprüche 1 oder 2, **dadurch gekennzeichnet, dass** die Baugruppe (26) lösbar mit einem Formhalter (9, 10) in Verbindung steht und ein Drosselgehäuse (27) umfasst, welches mit Mitteln zur Veränderung des Kühlluftstromes der Formkühlung (14) ausgerüstet ist.

4. Form- und Mündungskühlungsanordnung nach Anspruch 3, dadurch gekenn-zeichnet, dass die genannten Mittel durch einen Sperrkörper (28) dargestellt sind, der in einen Strömungspfad des Kühlluftstromes, dessen Querschnitt verändernd, schiebbar ist.

5. Form- und Mündungskühlungsanordnung nach einem der Ansprüche 1 bis 4, **dadurch gekennzeichnet, dass** der Kühlkanal (18) einen rechteckigen Querschnitt aufweist und über ein Ventil (17) mit dem Stationskasten (1) in Wirkverbindung steht.

6. Form- und Mündungskühlungsanordnung nach einem der Ansprüche 1 bis 5, **dadurch gekennzeichnet, dass** das Kühlstück (23) eine Anordnung von Luftaustritten (24) mit senkrecht orientierter Austrittsrichtung aufweist und dass der die Luftaustritte (24) tragende Teil des Kühlstücks (23) zum Untergreifen einer Stufe (46) einer Formhälfte (5, 6, 7, 8) eingerichtet ist, hierbei mit den Kühlluftbohrungen (25) der Formhälften (5, 6, 7, 8) jeweils durchgängige Strömungspfade bildend.

7. Form- und Mündungskühlungsanordnung nach Anspruch 6, dadurch gekenn-zeichnet, dass sich die Stufe (46) im Bereich der unteren Hälfte der Höhe einer Formhälfte (5, 6, 7, 8) befindet.

8. Form- und Mündungskühlungsanordnung nach einem der Ansprüche 1 bis 7, **dadurch gekennzeichnet, dass** das Kühlstück (23) auf einer Stufe (47) der Baugruppe (26) aufgelagert ist und lösbar mit dieser in Verbindung steht.

9. Form- und Mündungskühlungsanordnung nach einem der Ansprüche 1 bis 8, **dadurch gekennzeichnet, dass** das Kühlstück (23) auf einer im Verhältnis zu dem Formhalter (9, 10) festen Höhenlage befindet.

10. Form- und Mündungskühlungsanordnung nach einem der Ansprüche 1 bis 9, **dadurch gekennzeichnet, dass** die Mündungskühlung (13) einen teilweise innerhalb des Stationskastens (1) angeordneten, ein Ventil (37) tragenden Kühlungsaufbau (38) aufweist, der an seinem, dem Stationskasten (1) abgekehrten Ende Austrittsschlitze (35) aufweist.

11. Form- und Mündungskühlungsanordnung nach Anspruch 10, dadurch gekenn-zeichnet, dass der Kühlungsaufbau (38) an seinem den Austrittsschlitzen (35) zugekehrten Ende einen lösbar angeordneten, die Austrittsschlitze (35) tra-genden Abschnitt (45) aufweist.

12. Form- und Mündungskühlungsanordnung nach Anspruch 10 oder 11, **dadurch gekennzeichnet, dass** der Kühlungsaufbau (38) höhenverstellbar gegenüber dem Stationskasten (1) angeordnet ist.

13. Form- und Mündungskühlungsanordnung nach einem der Ansprüche 10 bis 12, **dadurch gekennzeichnet, dass** die Austrittsschlitze (35) eine horizontale Ausströmungsrichtung aufweisen.

14. Form- und Mündungskühlungsanordnung nach einem der Ansprüche 11 bis 13, **dadurch gekennzeichnet, dass** der Kühlungsaufbau (38) innerhalb eines Führungsgehäuses (34) höhenverstellbar angeordnet ist, dass das Führungsgehäuse (34) mit dem Stationskasten (1) in Verbindung steht und dass zur Darstellung der Höhenverstellbarkeit ein Spindelhubgetriebe (40) vorgesehen ist, welches über eine Antriebswelle (41) mit einem Antrieb (42) in Verbindung steht .

15. Form- und Mündungskühlungsanordnung nach Anspruch 14, **dadurch gekennzeichnet, dass** der Antrieb (42) außenseitig an dem Stationskasten (1) angeordnet ist.

16. Form- und Mündungskühlungsanordnung nach Anspruch 14 oder 15, **gekennzeichnet durch** eine Artikeldatenbank, in der unterschiedliche Höhenmaße der eingesetzten Formen (3, 4) gespeichert sind und die mit dem Antrieb (42) in Wirkverbindung steht.

17. Form- und Mündungskühlungsanordnung nach einem der Ansprüche 1 bis 16, **dadurch gekennzeichnet, dass** innerhalb der für die Mündungskühlung (13) eingerichteten Strömungspfade für die Kühlluft Einrichtungen zur Drosselung des Kühlluftstromes angeordnet sind.

## Claims

1. Mould and neck cooling arrangement for a glassware forming machine having a station box (1), having at least one mould (3, 4) composed of two mould halves (5, 6, 7, 8), wherein the mould halves are each arranged on a mould holder (9, 10) and can be moved between an open and a closed position by means of a drive, wherein each mould (3, 4) is associated with a neck cooling (13) and a mould cooling (14), wherein a cooling air supply is arranged within the station box (1), wherein the neck cooling (13) and the mould cooling (14) are connected independently of each other and to mutually separate openings of the station box (1), wherein the mould cooling (14) has a cooling channel (18), the one end of which is connected in an articulated manner to the station box (1), **characterised in that** the other end of the mould cooling (14) is connected to an assembly (26) in an articulated manner and in a manner enabling a length compensation, said assembly, for its part, being held by a mould holder (8, 9), with a cooling piece (23) which forms a link to at least one mould half (5, 6, 7, 8) and is detachably connected to the assembly (26), **in that** the cooling channel (18) is pivotable about a horizontal axis (33') at its end facing towards the station box (1) and is slidably received at its end facing away from the station box (1) in a connecting section (22) of the assembly (26).

2. Mould and neck cooling arrangement as claimed in claim 1, **characterised in that** said other end of the cooling channel (18) is plugged into a connecting section (22) of the assembly (26).

3. The mould and neck cooling arrangement as claimed in any one of claims 1 or 2, **characterised in that** the assembly (26) is releasably connected to a mould holder (9, 10) and comprises a throttle housing (27) which is equipped with means for changing the cooling air flow of the mould cooling (14).

4. Mould and neck cooling arrangement as claimed in claim 3, **characterised in that** said means are produced by a blocking body (28) which can be pushed into a flow path of the cooling air flow, changing the cross-section thereof.

5. Mould and neck cooling arrangement as claimed in any one of claims 1 to 4, **characterised in that** the cooling channel (18) has a rectangular cross-section and is in operatively connected to the station box (1) via a valve (17).

6. Mould and neck cooling arrangement as claimed in any one of claims 1 to 5, **characterised in that** the cooling piece (23) has an arrangement of air outlets (24) with a perpendicularly oriented outlet direction and **in that** the part of the cooling piece (23) supporting the air outlets (24) is arranged to engage underneath a step (46) of a mould half (5, 6, 7, 8), in this case with the cooling air bores (25) of the mould halves (5, 6, 7, 8) each forming continuous flow paths.

7. Mould and neck cooling arrangement as claimed in claim 6, **characterised in that** the step (46) is located in the region of the lower half of the height of a mould half (5, 6, 7, 8).

8. Mould and neck cooling arrangement as claimed in any one of claims 1 to 7, **characterised in that** the cooling piece (23) is mounted on a step (47) of the assembly (26) and is detachably connected thereto.

9. Mould and neck cooling arrangement as claimed in any one of claims 1 to 8, **characterised in that** the cooling piece (23) is located at a height position which is fixed in relation to the mould holder (9, 10).

10. Mould and neck cooling arrangement as claimed in any one of claims 1 to 9, **characterised in that** the neck cooling (13) has a cooling structure (38) which is arranged partially within the station box (1), supports a valve (37) and has outlet slots (35) at its end facing away from the station box (1).

11. Mould and neck cooling arrangement as claimed in claim 10, **characterised in that** the cooling structure (38) has, at its end facing towards the outlet slots (35), a detachably arranged section (45) supporting the outlet slots (35).

12. Mould and neck cooling arrangement as claimed in claim 10 or 11, **characterised in that** the cooling structure (38) is arranged in a height-adjustable manner with respect to the station box (1).

13. Mould and neck cooling arrangement as claimed in any one of claims 10 to 12, **characterised in that** the outlet slots (35) have a horizontal outflow direction.

14. Mould and neck cooling arrangement as claimed in any one of claims 11 to 13, **characterised in that** the cooling structure (38) is arranged in a height-adjustable manner within a guide housing (34), **in that** the guide housing (34) is connected to the station box (1) and **in that** in order to produce the height adjustability a spindle-type lifting gear (40) is provided which is connected to a drive (42) via a drive shaft (41).

15. Mould and neck cooling arrangement as claimed in claim 14, **characterised in that** the drive (42) is arranged on the outer side of the station box (1).

16. Mould and neck cooling arrangement as claimed in claim 14 or 15, **characterised by** an article database, in which different height dimensions of the used moulds (3, 4) are stored and which is operatively connected to the drive (42).

17. Mould and neck cooling arrangement as claimed in any one of claims 1 to 16, **characterised in that** devices for throttling the cooling air flow are arranged within the flow paths for the cooling air which are arranged for the neck cooling (13).

## Revendications

1. Ensemble de refroidissement de moules et d'embouchures pour une machine à mouler le verre avec une boîte station (1), avec au moins un moule (3, 4) composé de deux moitiés de moule (5, 6, 7, 8), dans lequel les moitiés de moule sont disposées respectivement au niveau d'un système de maintien de moule (9, 10) et peuvent être déplacées au moyen d'un entraînement entre une position d'ouverture et une position de fermeture, dans lequel un système de refroidissement d'embouchures (13) et un système de refroidissement de moules (14) sont associés à chaque moule (3, 4), dans lequel une alimentation en air de refroidissement est installée à l'intérieur de la boîte station (1), dans lequel le système de refroidissement d'embouchures (13) ainsi que le système de refroidissement de moules (14) sont raccordés indépendamment l'un de l'autre ainsi qu'à des ouvertures, séparées les unes des autres, de la boîte station (1), dans lequel le système de refroidissement de moules (14) présente un canal de refroidissement (18), dont une extrémité est reliée de manière articulée à la boîte station (1), **caractérisé en ce que** l'autre extrémité du système de refroidissement de moules (14) est reliée de manière articulée et de manière à permettre également une compensation de longueur à un module (26), qui est maintenu quant à lui par un système de maintien de moule (8, 9), avec une pièce de refroidissement (23) formant un organe de lien avec au moins une moitié de moule (5, 6, 7, 8), relié de manière amovible au module (26), que le canal de refroidissement (18) est logé de manière à pouvoir pivoter autour d'un axe horizontal (33') au niveau de son extrémité tournée vers la boîte station (1) et de manière à pouvoir glisser dans une section de raccordement (22) du module (26) au niveau de son extrémité opposée à la boîte station (1).

2. Ensemble de refroidissement de moules et d'embouchures selon la revendication 1, **caractérisé en ce que** l'autre extrémité évoquée du canal de refroidissement (18) est enfichée dans une section de raccordement (22) du module (26).

3. Ensemble de refroidissement de moules et d'embouchures selon l'une quelconque des revendications 1 ou 2, **caractérisé en ce que** le module (26) est relié de manière amovible à un système de maintien de moule (9, 10) et comprend un boîtier d'étranglement (27), lequel est équipé de moyens pour modifier le flux d'air de refroidissement du système de refroidissement de moules (14).

4. Ensemble de refroidissement de moules et d'embouchures selon la revendication 3, **caractérisé en ce que** les moyens mentionnés sont représentés par un corps de fermeture (28), qui peut être poussé sur une voie d'écoulement du flux d'air de refroidissement de manière à modifier la section transversale de ce dernier.

5. Ensemble de refroidissement de moules et d'embouchures selon l'une quelconque des revendications 1 à 4, **caractérisé en ce que** le canal de refroidissement (18) présente une section transversale rectangulaire et est en liaison fonctionnelle avec la boîte station (1) par l'intermédiaire d'une soupape (17) .

6. Ensemble de refroidissement de moules et d'embouchures selon l'une quelconque des revendications 1 à 5, **caractérisé en ce que** la pièce de refroidissement (23) présente un ensemble de sorties d'air (24) avec une direction de sortie orientée de manière perpendiculaire, et que la partie, supportant les sorties d'air (24), de la pièce de refroidissement (23) est mise au point pour venir en prise par en bas avec un étage (46) d'une moitié de moule (5, 6, 7, 8), formant dans le cas présent respectivement des voies d'écoulement continues avec les alésages d'air de refroidissement (25) des moitiés de moule (5, 6, 7, 8).

7. Ensemble de refroidissement de moules et d'embouchures selon la revendication 6, **caractérisé en ce que** l'étage (46) se trouve dans la zone de la moitié inférieure de la hauteur d'une moitié de moule (5, 6, 7, 8) .

8. Ensemble de refroidissement de moules et d'embouchures selon l'une quelconque des revendications 1 à 7, **caractérisé en ce que** la pièce de refroidissement (23) est déposée sur un étage (47) du module (26) et est reliée à celui-ci de manière amovible.

9. Ensemble de refroidissement de moules et d'embouchures selon l'une quelconque des revendications 1 à 8, **caractérisé en ce que** la pièce de refroidissement (23) se trouve sur une position en hauteur fixe par rapport au système de support de moule (9, 10).

10. Ensemble de refroidissement de moules et d'embouchures selon l'une quelconque des revendications 1 à 9, **caractérisé en ce que** le système de refroidissement d'embouchures (13) présente une structure de refroidissement (38) disposée en partie à l'intérieur de la boîte station (1), supportant une soupape (37), qui présente au niveau de son extrémité opposée à la boîte station (1) des entailles de sortie (35) .

11. Ensemble de refroidissement de moules et d'embouchures selon la revendication 10, **caractérisé en ce que** la structure de refroidissement (38) présente au niveau de son extrémité tournée vers les entailles de sortie (35) une section (45) disposée de manière amovible, supportant les entailles de sortie (35).

12. Ensemble de refroidissement de moules et d'embouchures selon la revendication 10 ou 11, **caractérisé en ce que** la structure de refroidissement (38) est disposée de manière ajustable en hauteur par rapport à la boîte station (1).

13. Ensemble de refroidissement de moules et d'embouchures selon l'une quelconque des revendications 10 à 12, **caractérisé en ce que** les entailles de sortie (35) présentent une direction d'écoulement sortant horizontale.

14. Ensemble de refroidissement de moules et d'embouchures selon l'une quelconque des revendications 11 à 13, **caractérisé en ce que** la structure de refroidissement (38) est disposée de manière ajustable en hauteur à l'intérieur d'un boîtier de guidage (34), que le boîtier de guidage (34) est relié à la boîte station (1), et qu'est prévu, pour représenter l'ajustabilité en hauteur, un vérin de levage (40), lequel est relié par l'intermédiaire d'un arbre d'entraînement (41) à un entraînement (42).

15. Ensemble de refroidissement de moules et d'embouchures selon la revendication 14, **caractérisé en ce que** l'entraînement (42) est disposé côté extérieur au niveau de la boîte station (1).

16. Ensemble de refroidissement de moules et d'embouchures selon la revendication 14 ou 15, **caractérisé par** une base de données d'articles, dans laquelle différentes mesures de hauteur des moules (3, 4) employés sont mémorisées et qui est en liaison fonctionnelle avec l'entraînement (42).

17. Ensemble de refroidissement de moules et d'embouchures selon l'une quelconque des revendications 1 à 16, **caractérisé en ce que** des équipements pour l'étranglement du flux d'air de refroidissement sont disposés à l'intérieur des voies d'écoulement mises au point pour le système de refroidissement d'embouchures (13) pour l'air de refroidissement.
